# EUROPEAN PATENT APPLICATION

(11) **EP 2 421 089 A2**
(43) Date of publication of application: **22.02.2012**
(21) Application number: 11250418.8
(22) Date of filing: 01.04.2011
(51) Int. Cl.: H01Q 1/24, H01Q 1/38, H01Q 1/40, B29C 45/16, H01R 12/71

(54) **Electronic device having antenna pattern embedded in case and method for manufacturing the same**

(30) Priority: 06.08.2010 KR 20100076105
(71) Applicant: Samsung Electro-Mechanics Co., Ltd., Gyunggi-do (KR)
(72) Inventor: Chang, Ki Won, Gyunggi-do (KR); Sung, Jae Suk, Gyunggi-do (KR); Hong, Ha Ryong, Gyunggi-do (KR); Lee, Dae Kyu, Gyunggi-do (KR); Kim, Tae Sung, Seoul (KR); Han, Chang Mok, Chungcheongnam-do (KR); Nam, Hyun Kil, Gyunggi-do (KR); Jeon, Dae Seong, Gyunggi-do (KR); Lee, Duk Woo, Gyunggi-do (KR); So, Won Wook, Gyunggi-do (KR)
(74) Representative: Powell, Timothy John

(57) **Abstract**

An electronic device (100) having an antenna pattern (210) embedded in a case and a method for manufacturing the same are provided. The electronic device includes: a radiator (210) embedded within a case (120,200) and having an antenna pattern part for transmitting and receiving a signal; a smart card (300) having a matching unit (320) for matching a signal between a main board separated from the case and the radiator and a connection pad (330) formed on one surface thereof to electrically connect the radiator and the matching unit; and a coupling member (220) having one end portion coupled to the radiator so as to be embedded within the case and the other end portion protruded from a lower surface of the case so as to be elastically in contact with the connection pad to allow the radiator and the matching unit to be electrically coupled.

## Description

### CROSS-REFERENCE TO RELATED APPLICATIONS

This application claims the priority of Korean Patent Application No. 10-2010-0076105 filed on August 6, 2010, in the Korean Intellectual Property Office, the disclosure of which is incorporated herein by reference.

### BACKGROUND OF THE INVENTION

### Field of the Invention

The present invention relates to an electronic device having an antenna pattern embedded in a case and a method for manufacturing the same.

### Description of the Related Art

Mobile communication terminals such as a mobile phone, a personal digital assistant (PDA), a navigation device, a notebook computer, and the like, supporting radio communications are requisite devices in modern society. With the technology evolving, diverse functions such as RFID (Radio-Frequency IDentification), NFC (Near Field Communications), GSM (Global System for Mobile communications), UMTS (Universal Mobile Telecommunications System), GPRS (General Packet Radio Service), WCDMA (wideband code division multiple access), WIFI (wireless fidelity), and the like, are increasingly added to mobile communication terminals, and one of the most important components enabling these functions is an antenna.

In order to implement such functions in a mobile communication terminal, a method for implementing a matching circuit on a main circuit board, designing an antenna such that it can operable at a frequency band according to each function, and coupling the main circuit board and the antenna must be considered.

However, because respective mobile communication terminals are designed to have different locations for matching circuits and antenna connection structures, generality is degraded when antennas for applying such functions are designed, and the fabrication cost increases due to a high-priced magnetic sheet applied to an FPCB antenna to secure antenna performance.

In addition, a space for the matching circuit on the main circuit board must be secured in advance, degrading a space utilization of the main circuit board.

### SUMMARY OF THE INVENTION

An aspect of the present invention provides an electronic device capable of implementing various functions commonly in every device by designing a matching circuit, which is devised for implementing those various functions, in a smart card, such as a USIM card, and forming a coupling member for coupling an antenna and the matching circuit in the antenna, and a method for manufacturing the same.

According to an aspect of the present invention, there is provided an electronic device including: a radiator embedded within (inside of, or in the interior of) a case and having an antenna pattern part for transmitting and receiving a signal; a smart card having a matching unit for matching a signal between a main board separated from the case and the radiator and a connection pad formed on one surface thereof to electrically connect the radiator and the matching unit; and a coupling member having one end portion coupled to the radiator so as to be embedded within the case and the other end portion protruded from a lower surface of the case so as to be elastically in contact with the connection pad to allow the radiator and the matching unit to be electrically coupled.

The electronic device may further include: a radiator frame allowing the radiator and the one end portion of the coupling member to be embedded within the case.

The radiator frame may be made of a polymer-ceramic composite material including a magnetic component having a high permeability or a dielectric component having a high permittivity.

The electronic device may further include: a case frame covering one surface of the radiator frame to allowing the antenna pattern part to be embedded between the case frame and the radiator frame.

The radiator frame may include: a radiator support in contact with one side of the coupling member and protruded from a face of the radiator frame opposed to one surface on which the antenna pattern part is formed; and a reinforcing part in contact with the other side of the coupling member to prevent the coupling member from being released from the radiator support.

The coupling member may include: a coupling portion extending by being bent down from one end of the antenna pattern part; and a coupling terminal portion extending by being bent to the side from an end portion of the coupling portion opposed to the end portion coupled to one end of the antenna pattern part and having a bent portion elastically in contact with the connection pad.

The coupling member may be configured as a member separate from the antenna pattern part.

The coupling member may be configured as a C-clip or a pogo pin.

The antenna pattern part may be a low frequency antenna allowing the smart card to perform RFID (Radio-Frequency IDentification), NFC (Near Field Communications), or WIFI (Wireless Fidelity) function.

The antenna pattern part may be a high frequency antenna allowing the smart card to perform a GSM (Global System for Mobile communications) or UMTS (Universal Mobile Telecommunications System) function.

According to another aspect of the present invention, there is provided an electronic device including: a radiator having an antenna pattern part for transmitting and receiving a signal; a coupling member having one end portion coupled to the radiator so as to be embedded within a case and the other end portion protruded from a lower surface of the case; a radiator frame formed such that the radiator and one end of the coupling member are embedded within the case, and having a radiator support separated from the other end of the coupling member to allow the coupling member to have elasticity and protruded from a face opposed to one surface on which the antenna pattern part is formed; and a smart card having a matching unit for matching a signal between a main board separated from the case and the radiator and a connection pad coupled to the other end portion of the coupling member.

The electronic device may further include: a case frame covering one surface of the radiator frame to allow the antenna pattern part to be embedded between the case frame and the radiator frame.

The coupling member may include: a coupling portion extending by being bent down from one end of the antenna pattern part and having one side in contact with the radiator support; and a coupling terminal portion extending by being bent to the side from an end portion of the coupling portion opposed to the end portion coupled to one end of the antenna pattern part and having a bent portion elastically in contact with the connection pad.

According to another aspect of the present invention, there is provided a method for manufacturing an electronic device, including: coupling one end portion of a coupling member to a radiator having an antenna pattern part for transmitting and receiving a signal; disposing the radiator, to which the coupling member is coupled, such that it is brought into contact with one surface of a mold for manufacturing a radiator frame and filling the mold for manufacturing a radiator frame with a resin material to manufacture a radiator frame; disposing the radiator frame within a mold for manufacturing a case and filling the mold for manufacturing a case with a resin material to manufacture a case with the radiator embedded therein; and connecting the other end portion of the coupling member to a connection pad formed on one surface of a smart card including a matching unit for matching a signal between a main board and the radiator.

The method may further include: bending the other end portion of the coupling member to the side and forming a bent portion elastically in contact with the connection pad.

In the manufacturing of the radiator frame, the coupling member may be disposed in an accommodation recess formed in the mold for manufacturing the radiator frame, the accommodation recess may be filled with a resin material, the radiator support may be formed at one side of the coupling member, and a reinforcing part may be formed at the other side of the coupling member.

The other end portion of the coupling member may be disposed at a filling preventing hole formed on a lower surface of the accommodation recess so that the other end portion of the coupling member may not be filled with the resin material.

### BRIEF DESCRIPTION OF THE DRAWINGS

The above and other aspects, features and other advantages of the present invention will be more clearly understood from the following detailed description taken in conjunction with the accompanying drawings, in which:

FIG. 1 is an cutaway exploded perspective view of a mobile communication terminal, an electronic device, according to a first exemplary embodiment of the present invention;

FIG. 2 is a coupled sectional view of a case of the mobile communication terminal, an electronic device, and a USIM card according to the first exemplary embodiment of the present invention;

FIG. 3 is a view showing a configuration of the USIM card of the mobile communication terminal, an electronic device, according to the first exemplary embodiment of the present invention;

FIG. 4 is a perspective view showing a radiator and a coupling member of the mobile communication terminal, an electronic device, according to the first exemplary embodiment of the present invention;

FIG. 5 is a perspective view of a radiator frame of the mobile communication terminal, an electronic device, according to the first exemplary embodiment of the present invention;

FIG. 6 is a sectional view of a radiator frame of an electronic device according to a second exemplary embodiment of the present invention;

FIG. 7 is a sectional view of a radiator frame of an electronic device according to a third exemplary embodiment of the present invention;

FIG. 8 is a sectional view of the radiator frame of an electronic device according to the first exemplary embodiment of the present invention;

FIGS. 9A to 9C are views showing the process of a method for manufacturing the radiator frame of FIG. 8;

FIG. 10A is a sectional view of a case of an electronic device having an antenna pattern embedded therein according to the first exemplary embodiment of the present invention; and

FIG. 10B is a schematic sectional view showing how a mold for manufacturing a case is filled with a resin material to manufacture the case of FIG. 10A.

### DETAILED DESCRIPTION OF THE PREFERRED EMBODIMENT

Exemplary embodiments of the present invention will now be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art.

In the drawings, the shapes and dimensions may be exaggerated for clarity, and the same reference numerals will be used throughout to designate the same or like components.

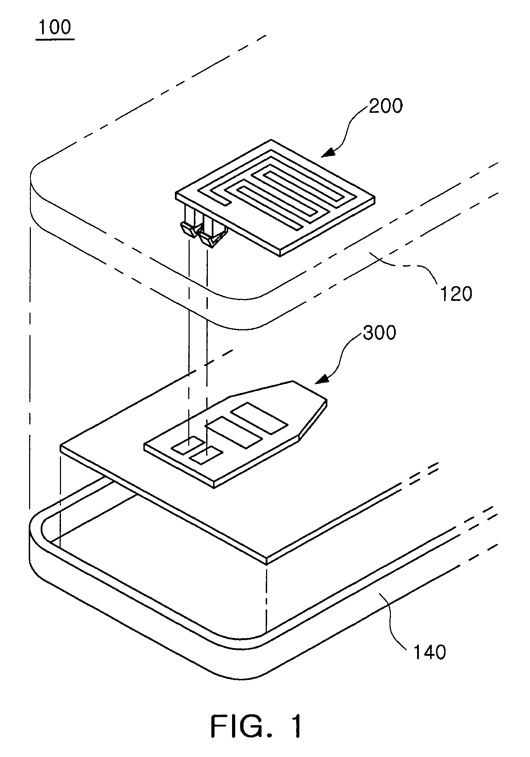

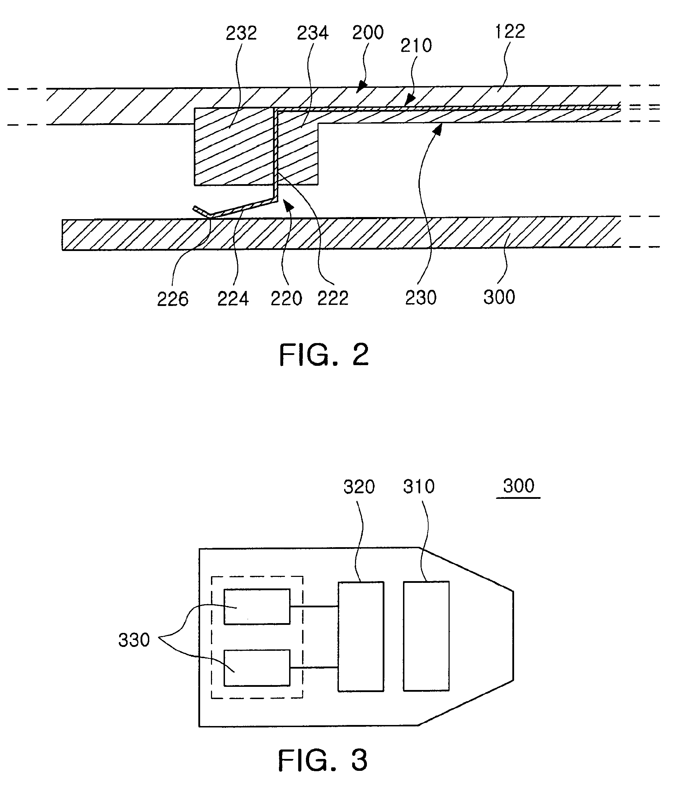

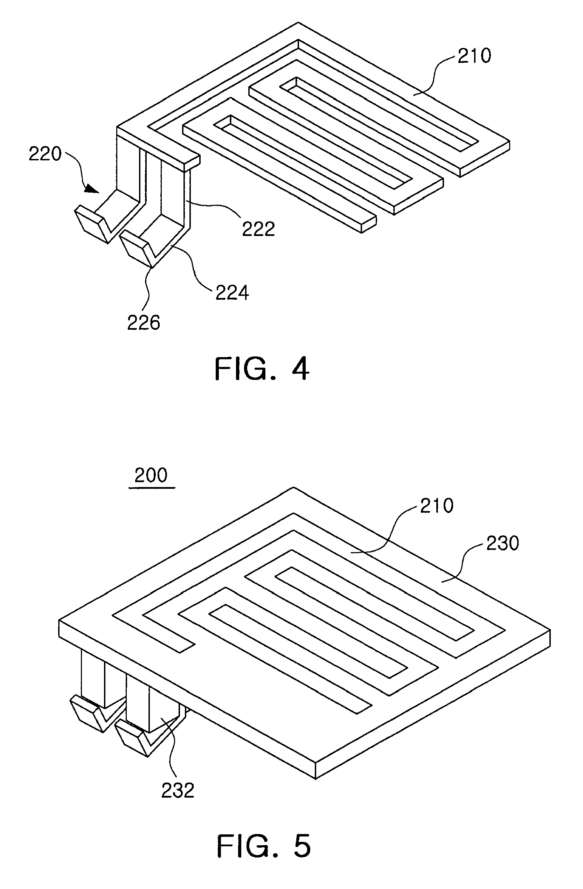

FIG. 1 is a cutaway exploded perspective view of a mobile communication terminal, an electronic device, according to a first exemplary embodiment of the present invention. FIG. 2 is a coupled sectional view of a case of the mobile communication terminal, an electronic device, and a USIM card according to the first exemplary embodiment of the present invention. FIG. 3 is a view showing a configuration of the USIM card of the mobile communication terminal, an electronic device, according to the first exemplary embodiment of the present invention. FIG. 4 is a perspective view showing a radiator and a coupling member of the mobile communication terminal, an electronic device, according to the first exemplary embodiment of the present invention. FIG. 5 is a perspective view of a radiator frame of the mobile communication terminal, an electronic device, according to the first exemplary embodiment of the present invention.

With reference to FIGS. 1 to 5, a mobile communication terminal 100, an electronic device, according to a first exemplary embodiment of the present invention may include an upper case 120 having a radiator 210 with an antenna pattern part embedded therein, a lower case 140 accommodating a main body, and a smart card 300 mounted on one surface of the main body.

As shown in FIGS. 1 and 2, the radiator frame 200 including a radiator 210 having an antenna pattern part formed thereon and a coupling member 220 for electrically coupling the antenna pattern part are formed within the upper case 120 such that the radiator 210 is embedded.

The upper case 120 includes a case frame 122 that covers one surface of the radiator frame 200 so that the radiator 210 can be embedded between the case frame 122 and the radiator frame 200.

The radiator frame 200 may be formed by insert injection-molding the radiator 210 having the coupling member 220 coupled one end thereof, and may be made of a polymer-ceramic composite material including a magnetic component having a high permeability.

A radiator support 232 is formed to be in contact with one side of the coupling member 220, and a reinforcing part 234 may be formed to be in contact with the other side of the coupling member 220 in order to prevent the coupling member 220 from being released from the radiator support 232.

In the present exemplary embodiment, the radiator 210 is separately manufactured and forms the radiator frame 200 through insert injection molding with the coupling member 220, but the present invention is not limited thereto and a conductive material may be coated on one surface of a body part 230 and solidified to form the radiator 210 and the coupling member 220 may be bonded to one end of the radiator 210.

The radiator 210 may be formed through one of sputtering, printing, plating, stamping, drawing, and dispensing on the body part 230.

In addition, the body part 230 may include an insertion groove formed between the radiator support 232 and the reinforcing part 234 to allow the coupling member 220 to be inserted therein so as to be coupled to the radiator 210. Namely, a coupling portion 222 of the coupling member 220 is inserted into the insertion groove and formed such that one side thereof is in contact with the radiator support 232 and the other side thereof is in contact with the reinforcing part 234.

As shown in FIG. 3, the smart card 300 may include an IC chip 310, a matching circuit 320, and a coupling member 330 to which the coupling member 220 is connected.

The smart card 300, including the IC chip 310 equipped with a microprocessor, an operating system, a security module, a memory, and the like, to allow the smart card 300 to have a storage function, a calculation function, and a security function, is a plastic card commonly used as a means for recording information, identifying a person, payment, and the like in the entire social sectors such as communication, banking, education, administration, traffic, and the like. A smart card for a module for checking a mobile communication terminal subscriber includes a SIM (subscriber identity module) card, a USIM (universal subscriber identity module) card, a UIM (user identity module) card, and the like.

The IC chip 310 is mounted on a substrate made of a plastic material, on which a microprocessor, an operating system, a security module, a memory, and the like, are mounted, and a contact terminal pad may be formed on an upper surface of the substrate, for an electrical connection of the IC chip 310.

The matching circuit 320 is configured as a combination of impedance and a condenser having a π-shaped or T-shaped structure and connected in series/parallel. The matching circuit 320 matches a reception signal received from the antenna pattern part to a reception signal suitable for the main body of the mobile communication terminal 100 or the smart card 300, and matches a transmission signal from the main body of the mobile communication terminal 100 or the smart card 300 to a transmission signal suitable for the antenna pattern part.

The coupling member 220, coupled to one end portion of the radiator 210, may be elastically in contact with the connection pad 330 in order to electrically connect the radiator 210 including the antenna pattern part and the matching circuit 320.

As shown in FIGS. 4 and 5, the radiator frame 200 may include the radiator 210 including the antenna pattern part for transmitting or receiving a signal, a coupling member 220 coupled to one end portion of the radiator 210 to transmit or receive the signal to the main body of the mobile communication terminal 100 or the smart card 300 or receive the signal from the main body of the mobile communication terminal 100 or the smart card 300, and a body part 230 allowing the radiator 210 and the coupling member 220 to be embedded in the upper case 120.

The radiator 210 may be made of a conductive material such as aluminum, copper, and the like, may include the antenna pattern part forming a meander line to receive external signals of various bands.

The antenna pattern part may be a low frequency antenna allowing the smart card to perform RFID (Radio-Frequency IDentification), NFC (Near Field Communications), or WIFI (Wireless Fidelity) function.

The antenna pattern part may be a high frequency antenna allowing the smart card to perform a GSM (Global System for Mobile communications) or UMTS (Universal Mobile Telecommunications System) function.

The coupling member 220 may be formed by bending, forming, and drawing a portion of the radiator 210. One end portion of the coupling member 220 may be coupled to the radiator 210 and embedded within the upper case 120, and the other end thereof may be protruded from a lower surface of the upper case 120.

The coupling member 220 may include a coupling portion 222 extending by being bent down from one end of the radiator 210 and a coupling terminal portion 224 extending by being bent to the side from an end portion of the coupling portion 222 opposed to the end portion coupled to one end of the radiator 210.

The coupling portion 222 may be formed to be have a greater length than that of the radiator support 232 and the reinforcing part 234 to facilitate bending, and accordingly, the opposite end portion of the coupling portion 222 can be separated from the radiator support 232 and the reinforcing part 234.

The coupling terminal portion 224 may include a bent portion 226 formed to be elastically in contact with the connection pad 330. The bent portion 226 may be formed by upwardly bending the coupling terminal portion 224, and the coupling member 220 and the connection pad 330 can be reliably connected by the presence of the bent portion 226.

The body part 230 may include the radiator support 232 in contact with one side of the coupling portion 222 and protruded from a face of the body part 230 opposed to one surface on which the antenna pattern part is formed, and a reinforcing part 234 in contact with the other side of the coupling portion 222 to prevent the coupling member 220 from being released from the radiator support 232.

The radiator support 232 can firmly support the coupling portion 222, and when the coupling terminal portion 224 is elastically coupled to the connection pad 330, the radiator support 232 serves to prevent the coupling terminal portion 224 from being excessively bent toward the coupling portion 222 due to excessive elasticity so as to cause a defective contact.

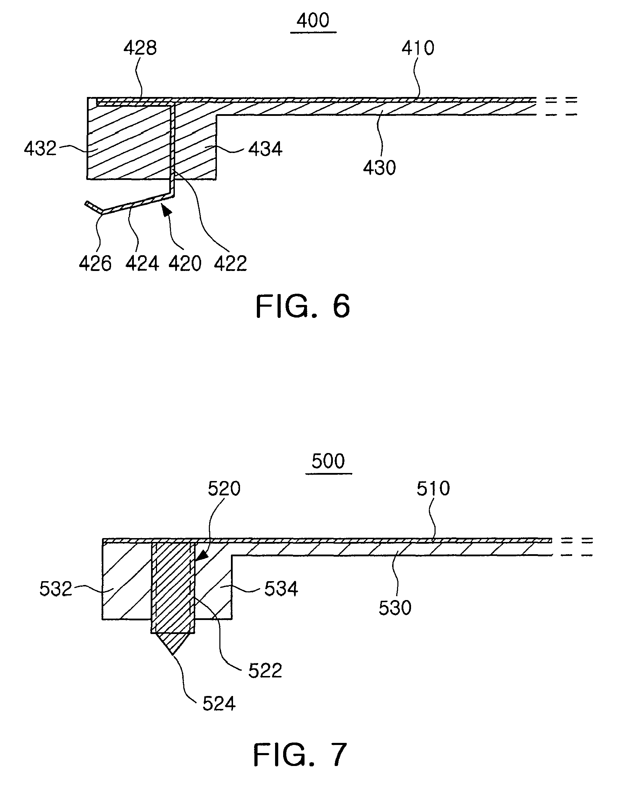

FIG. 6 is a sectional view of a radiator frame of an electronic device according to a second exemplary embodiment of the present invention.

The radiator frame of an electronic device according to the second exemplary embodiment of the present invention illustrated in FIG. 6 is a variant of the coupling member, and the other elements of the electronic device according to the second exemplary embodiment of the present invention are substantially the same as those of the electronic device according to the first exemplary embodiment of the present invention as illustrated in FIGS. 1 and 2, so a detailed description thereof will be omitted and only the differences therebetween will be described hereinafter.

With reference to FIG. 6, a radiator frame 400 of the electronic device according to the second exemplary embodiment of the present invention may include a radiator 410 including an antenna pattern part for transmitting or receiving a signal, a coupling member 420 coupled to one end portion of the radiator 410 to transmit or receive the signal to or from a main body of the electronic device or a smart card, and a body part 430 formed to allow the radiator 410 and the coupling member 420 to be embedded within the case of the electronic device.

The coupling member 420 may include a front portion 428 attached to the opposite side of an exposed surface of the radiator 410, a coupling portion 422 extending by being downwardly bent from one end of the front portion 428, and a coupling terminal portion 424 extending by being bent to the side from an end portion of the coupling portion 422 opposed to the end portion coupled to one end of the front portion 428.

Because the coupling member 420 according to the present exemplary embodiment has the front portion 428 attached with the radiator 410 in a surface-contact manner, the radiator 410 and the coupling member 420 can be reliably bonded (or attached).

The coupling member 420 according to the present exemplary embodiment may be, for example, a C-clip, or the like.

FIG. 7 is a sectional view of a radiator frame of an electronic device according to a third exemplary embodiment of the present invention.

The radiator frame of an electronic device according to the second exemplary embodiment of the present invention illustrated in FIG. 7 is a variant of the coupling member, and the other elements of the electronic device according to the second exemplary embodiment of the present invention are substantially the same as those of the electronic device according to the first exemplary embodiment of the present invention as illustrated in FIGS. 1 and 2, so a detailed description thereof will be omitted and the difference therebetween will be described hereinafter.

With reference to FIG. 7, a radiator frame 500 of the electronic device according to the third exemplary embodiment of the present invention may include a radiator 510 including an antenna pattern part for transmitting or receiving a signal, a coupling member 520 coupled to the radiator 510 to transmit or receive the signal to or from a main body of the electronic device or a smart card, and a body part 530 formed to allow the radiator 510 and the coupling member 520 to be embedded within the case of the electronic device.

The coupling member 520 may include a pin part 524 attached to the opposite side of an exposed surface of the radiator 510 and is elastically in contact with a connection pad of the smart card at the opposite end portion of an end portion attached to the radiator 510, and a housing unit 522 in which the pin part 524 is inserted.

The pin part 524 may be configured as a spring member, and the opposite end portion may be sharp. The pin part 524 may be contracted to the interior of the housing part 522 according to a bonding force between the upper and lower cases of the electronic device so as to be connected to the connection pad.

The coupling member 520 according to the present exemplary embodiment may be, for example, a pogo pin, or the like.

A method for manufacturing a mobile communication terminal, an electronic device, according to the first exemplary embodiment of the present invention will now be described.

First, in brief, the radiator is manufactured by forming the antenna pattern part, the coupling member is coupled to the radiator, which is then insert injection-molded to manufacture the radiator frame. The radiator frame is insert injection-molded to complete the upper case of the electronic device, and the upper case and a lower case are then combined, whereby the coupling member are elastically in contact with the connection pad of the smart card so as to be connected, thus completing the electronic device according to an exemplary embodiment of the present invention.

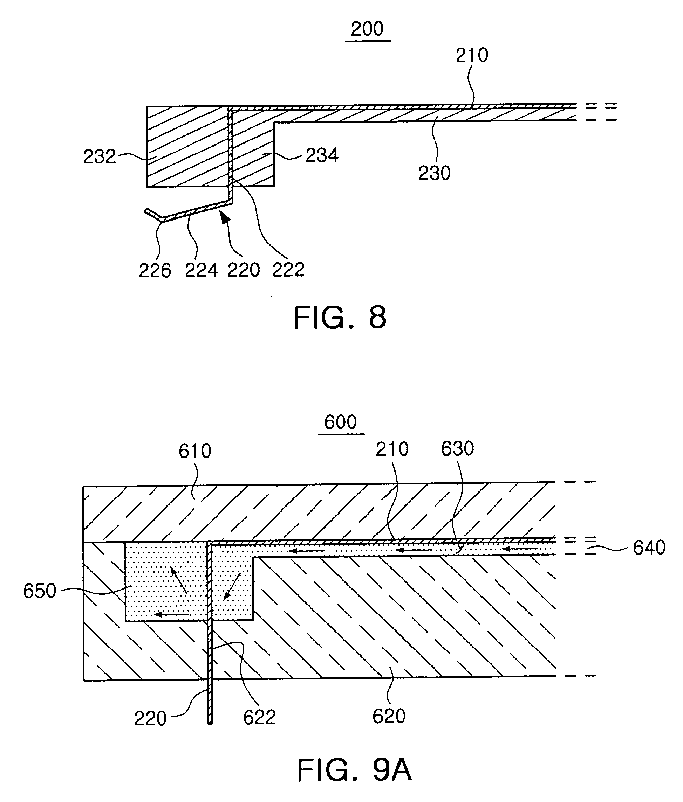

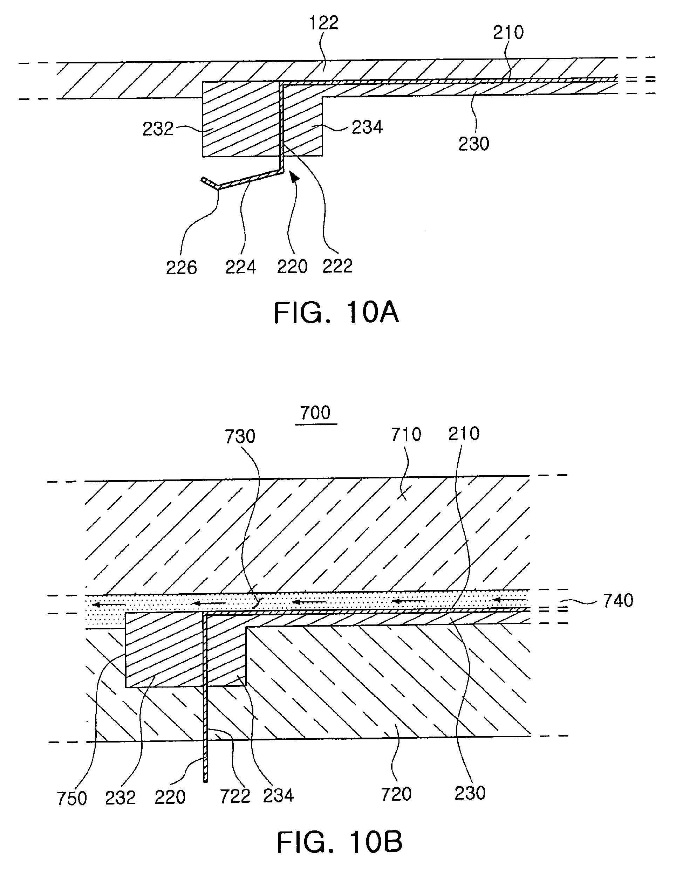

FIG. 8 is a sectional view of the radiator frame of an electronic device according to the first exemplary embodiment of the present invention. FIGS. 9A to 9C are views showing the process of a method for manufacturing the radiator frame of FIG. 8. FIG. 10A is a sectional view of a case of an electronic device having an antenna pattern embedded therein according to the first exemplary embodiment of the present invention. FIG. 10B is a schematic sectional view showing how a mold for manufacturing a case is filled with a resin material to manufacture the case of FIG. 10A.

With reference to FIGS. 9A to 9C, one end portion of the coupling member 220 is coupled to the radiator 210 having the antenna pattern part for transmitting and receiving a signal, which is then disposed in a radiator frame manufacturing mold 600.

The radiator frame manufacturing mold 600 includes an upper mold 610 on which the surface of the radiator 210 on which the antenna pattern part is formed is disposed to be in contact therewith and a lower mold 620 filled with a resin material therein.

The lower mold 620 may include an inner space 630 filled with the resin material, and an accommodation recess 650 may be formed on a lower surface of the inner space 630 in order to form the radiator support 232 and the reinforcing part 234.

A filling preventing hole 622 may be formed on a lower surface of the accommodation recess 650 in which a portion of the coupling member 220 is inserted so that the portion for forming the coupling terminal portion 224 of the coupling member 220 cannot be filled with the resin material.

The filling preventing hole 622 may be penetratingly formed on the lower mold 620 in a thicknesswise direction from the lower surface of the accommodation recess 650. In the present exemplary embodiment, the filling preventing hole 622 is formed penetratingly formed on the lower mold 620 and the portion, where the coupling terminal portion 224 of the coupling member 220 is to be formed, passing through the filling preventing hole 622, is provided from the lower portion of the lower mold 620. However, the present invention is not limited thereto, and the portion of the coupling portion 220 may not be protruded from the lower portion of the lower mold 620, or the filling preventing hole 622 may not be penetratingly formed on the lower mold 620. In this case, the lower mold 620 needs to have a thickness larger than the length of the coupling member 220.

When the upper mold 610 and the lower mold 620 in which the radiator 210 and the coupling member 220 are disposed are combined, as shown in FIG. 9A, a resin material is injected into the inner space 630 formed as the upper mold 610 and the lower mold 620 are combined through an injection hole 640.

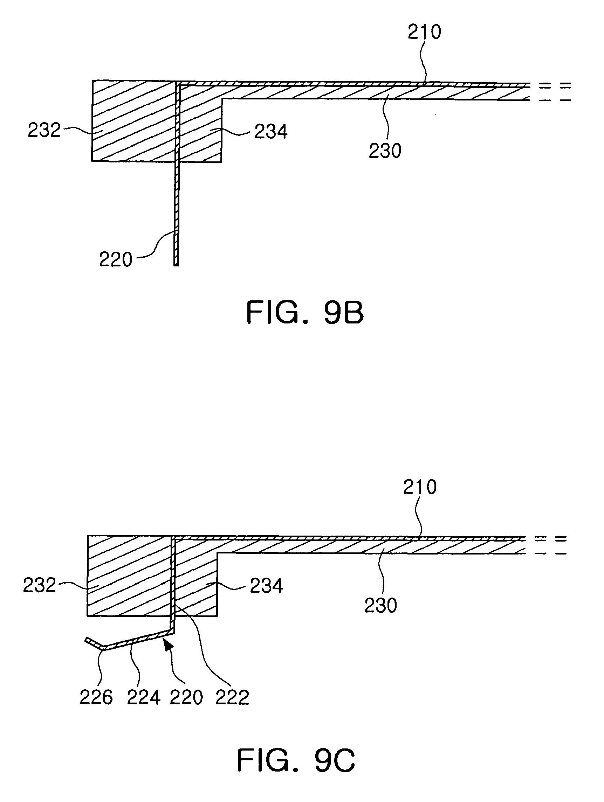

When the body part 230 including the radiator support 232 and the reinforcing part 234 is formed according to the filling of the resin material, as shown in FIG. 9B, the radiator frame 200 is separated from the radiator frame manufacturing mold 600.

As shown in FIG. 9C, the portion of the coupling member 220 not supported by the radiator support 232 is bent in a lateral direction to form the coupling terminal portion 224, and a free end portion of the coupling terminal portion 224 is upwardly bent to form a bent portion 226 elastically in contact with the connection pad 330, thus completing the radiator frame 200 illustrated in FIG. 8.

In this case, preferably, the coupling portion 222 is separated from the radiator support 232 in consideration of elastic deformation of the coupling terminal portion 224, and in this case, preferably, the coupling terminal portion 224 may be slantingly bent at an obtuse angle, rather than at a right angle with respect to the coupling portion 222.

Here, the resin material may be made of a polymer-ceramic composite material including a magnetic material having a high permeability or a dielectric component having a high dielectric permittivity, in order to improve the radiation efficiency of the radiator 210.

In the present exemplary embodiment, the radiator frame 200 is manufactured through injection-molding in a state in which the coupling member 220 is not bent, and the coupling member 220 is then bent twice to form the coupling terminal portion 224, but the present invention is not limited thereto, and the coupling terminal portion 224 may be formed by bending the coupling member 220, which is then disposed in the radiator frame manufacturing mold 600 so as to be injection-molded.

In detail, the coupling member 220 is vertically bent in a lateral direction primarily to form the coupling terminal portion 224, the free end portion of the coupling terminal portion 224 is upwardly bent secondarily to form the bent portion 226, and the coupling terminal portion 224 and the bent portion 226 are disposed to be in contact with the lower surface and the side surface of the accommodation recess 650 of the lower mold 620. Then, the resultant structure is filled with a resin material, the radiator frame 200 is separated, the coupling terminal part 224 is elastically deformed so as to be separated from the radiator support 232, thus completing the radiator frame 200.

The process of manufacturing the upper case 120 of the electronic device by insert injection-molding the radiator frame 200 will now be described with reference to FIG. 10B.

As shown in FIG. 10B, the radiator frame 200 may be disposed in an upper case manufacturing mold 700, the interior of the upper case manufacturing mold 700 may be filled with a resin material to thus manufacture the upper case 120 with the radiator 210 embedded therein.

The upper case manufacturing mold 700 may include an upper mold 710 having an inner space 730 to be filled with the resin material to form the case frame 122 and a lower mold 720 having an inner space in which the radiator frame 200 is disposed.

The inner space of the lower mold 720 has substantially the same shape as that of the body part 230 including the radiator support 232 and the reinforcing part 234 to allow the radiator frame 200 to be disposed therein. Namely, an accommodation recess 750 may be formed on a lower surface of the lower mold 720 in order to accommodate the radiator support 232 and the reinforcing part 234 therein.

A filling preventing hole 722 may be formed on a lower surface of the accommodation recess 750 in which a portion of the coupling member 220 is inserted so that the portion for forming the coupling terminal portion 224 of the coupling member 220 cannot be filled with the resin material.

The radiator frame 200 is disposed in the lower mold 720, the lower mold 720 and the upper mold 710 are combined, and the resin material is injected into the inner space 730, which has been formed according to the combining operation, through an injection opening 740 to cover one surface of the radiator frame 200 with the resin material. The portion filled with the resin material constitutes the case frame 122.

When the filling of the resin material is completed, the upper case 120 with the radiator frame 200 embedded therein is separated from the upper case manufacturing mold 700, and as discussed above, the coupling member 220 is bent to form the coupling terminal portion 224, thus completing the upper case 120 as illustrated in FIG. 10A.

Next, the lower case 140 and the upper case 120, in which the main circuit board-mounted main body and the smart card attached on one surface of the main body is accommodated, respectively, are combined to allow the coupling terminal part 224 and the connection pad 330 to be connected to each other.

When the upper case 120 and the lower case 140 are combined, the positions of the connection pad 330 and the bent portion 226 must be aligned, and the coupling terminal part 224 is elastically deformed owing to a bonding force generated at this time so as to be elastically brought into the connection pad 330, whereby the coupling terminal part 224 and the connection pad 330 are connected.

Meanwhile, in the present exemplary embodiment, a portion of the radiator is formed through bending, forming, and drawing, but the present invention may not be limited thereto and the radiator and the coupling member may be separately manufactured and then attached.

In addition, in the present exemplary embodiment, the radiator frame is manufactured by insert injection-molding the radiator and the coupling member, but the present invention is not limited thereto and a conductive material may be directly coated on the radiator frame through sputtering, printing, plating, stamping, drawing, and dispensing, in forming the radiator frame.

In addition, in the present exemplary embodiment, the upper case is manufactured by insert injection-molding the radiator frame, but the present invention is not limited thereto and the radiator frame may be attached to one surface of the case frame and may be variably modified according to requirements and design specifications.

Exemplary embodiments of the present invention have been described, which, however, are merely illustrative and a person skilled in the art would understand that various modifications and equivalents may be made therefrom. For example, the configuration of forming the radiator support or the reinforcing portion in the radiator frame is merely illustrative. Namely, the radiator support or the reinforcing portion may not be formed in the radiator frame, or only one of the radiator support and the reinforcing portion may be formed. The true technical coverage of the present invention should be determined by the appended claims.

As set forth above, according to exemplary embodiments of the invention, various functions can be commonly implemented in any device without altering the design of a main circuit board.

In addition, because there is no need to spare a space for a matching circuit or space for the coupling member for coupling a coupling member for coupling the antenna.

While the present invention has been shown and described in connection with the exemplary embodiments, it will be apparent to those skilled in the art that modifications and variations can be made without departing from the spirit and scope of the invention as defined by the appended claims.

## Claims

1. An electronic device comprising:
a radiator embedded within a case and having an antenna pattern part for transmitting and receiving a signal;
a smart card having a matching unit for matching a signal between a main board separated from the case and the radiator and a connection pad formed on one surface thereof to electrically connect the radiator and the matching unit; and
a coupling member having one end portion coupled to the radiator so as to be embedded within the case and the other end portion protruded from a lower surface of the case so as to be elastically in contact with the connection pad to allow the radiator and the matching unit to be electrically coupled.

2. The device of claim 1, further comprising:
a radiator frame allowing the radiator and the one end portion of the coupling member to be embedded within the case.

3. The device of claim 2, wherein the radiator frame is made of a polymer-ceramic composite material including a magnetic component having a high permeability or a dielectric component having a high dielectric permittivity.

4. The device of claim 2, further comprising:
a case frame covering one surface of the radiator frame to allowing the antenna pattern part to be embedded between the case frame and the radiator frame.

5. The device of claim 2, wherein the radiator frame comprises:
a radiator support in contact with one side of the coupling member and protruded from a face of the radiator frame opposed to one surface on which the antenna pattern part is formed; and
a reinforcing part in contact with the other side of the coupling member to prevent the coupling member from being released from the radiator support.

6. The device of claim 1, wherein the coupling member comprises:
a coupling portion extending by being bent down from one end of the antenna pattern part; and
a coupling terminal portion extending by being bent to the side from an end portion of the coupling portion opposed to the end portion coupled to one end of the antenna pattern part and having a bent portion elastically in contact with the connection pad.

7. The device of claim 1, wherein the coupling member is configured as a member separate from the antenna pattern part.

8. The device of claim 7, wherein the coupling member is configured as a C-clip or a pogo pin.

9. The device of claim 1, wherein the antenna pattern part is a low frequency antenna allowing the smart card to perform RFID (Radio-Frequency IDentification), NFC (Near Field Communications), or WIFI (Wireless Fidelity) function.

10. The device of claim 1, wherein the antenna pattern part is a high frequency antenna allowing the smart card to perform a GSM (Global System for Mobile communications) or UMTS (Universal Mobile Telecommunications System) function.

11. An electronic device comprising:
a radiator having an antenna pattern part for transmitting and receiving a signal;
a coupling member having one end portion coupled to the radiator so as to be embedded within a case and the other end portion protruded from a lower surface of the case;
a radiator frame formed such that the radiator and one end of the coupling member are embedded within the case, and having a radiator support separated from the other end of the coupling member to allow the coupling member to have elasticity and protruded from a face opposed to one surface on which the antenna pattern part is formed; and
a smart card having a matching unit for matching a signal between a main board separated from the case and the radiator and a connection pad coupled to the other end portion of the coupling member.

12. The device of claim 11, further comprising a case frame covering one surface of the radiator frame to allow the antenna pattern part to be embedded between the case frame and the radiator frame.

13. The device of claim 11, wherein the coupling member comprises:
a coupling portion extending by being bent down from one end of the antenna pattern part and having one side in contact with the radiator support; and
a coupling terminal portion extending by being bent to the side from an end portion of the coupling portion opposed to the end portion coupled to one end of the antenna pattern part and having a bent portion elastically in contact with the connection pad.

14. A method for manufacturing an electronic device, the method comprising:
coupling one end portion of a coupling member to a radiator having an antenna pattern part for transmitting and receiving a signal;
disposing the radiator, to which the coupling member is coupled, such that it is brought into contact with one surface of a mold for manufacturing a radiator frame and filling the mold for manufacturing a radiator frame with a resin material to manufacture a radiator frame;
disposing the radiator frame within a mold for manufacturing a case and filling the mold for manufacturing a case with a resin material to manufacture a case with the radiator embedded therein; and
connecting the other end portion of the coupling member to a connection pad formed on one surface of a smart card including a matching unit for matching a signal between a main board and the radiator.

15. The method of claim 14, further comprising:
bending the other end portion of the coupling member to the side and forming a bent portion elastically in contact with the connection pad.

16. The method of claim 14, wherein in the manufacturing of the radiator frame, the coupling member is disposed in an accommodation recess formed in the mold for manufacturing the radiator frame, the accommodation recess is filled with a resin material, the radiator support is formed at one side of the coupling member, and a reinforcing part is formed at the other side of the coupling member.

17. The method of claim 16, wherein the other end portion of the coupling member is disposed at a filling preventing hole formed on a lower surface of the accommodation recess so that the other end portion of the coupling member may not be filled with the resin material.
